# FASCICULE DE BREVET EUROPEEN

(11) **EP 3 675 584 B1**
(45) Date de publication et mention de la délivrance du brevet: **25.08.2021**
(21) Numéro de dépôt: 19219541.0
(22) Date de dépôt: 23.12.2019
(51) Int. Cl.: H04B 7/185, H04B 7/204, H04W 24/02, H04W 72/04, H04W 72/08

(54) **PROCEDE ET SYSTEME POUR AUGMENTER LA CAPACITE DES COMMUNICATIONS**
VERFAHREN UND SYSTEM ZUR ERHÖHUNG DER KOMMUNIKATIONSKAPAZITÄT
METHOD AND SYSTEM FOR INCREASING THE CAPACITY OF COMMUNICATIONS

(30) Priorité: 28.12.2018 FR 1874326
(43) Date de publication de la demande: 01.07.2020
(73) Titulaire: Thales, 92400 Courbevoie (FR)
(72) Inventeur: SOULIE, Antoine, 92622 GENNEVILLIERS CEDEX (FR); TOURET, Marc, 92622 GENNEVILLIERS CEDEX (FR); ROZEC, Jean-Noël, 92622 GENNEVILLIERS CEDEX (FR)
(74) Mandataire: Marks & Clerk France

(56) Documents cités:
- EP-A1- 3 182 614
- EP-A1- 3 253 124
- US-A1- 2002 183 057
- US-A1- 2010 128 656

## Description

L'invention concerne un procédé et un système permettant d'augmenter la capacité des communications dans un réseau satellitaire.

Dans le domaine des communications par satellites, les nouveaux satellites offrent maintenant plus de capacité dans des zones plus denses, i.e., plus d'utilisateurs présents. A cet effet, la charge utile télécommunication des satellites est constituée de plusieurs spots de petite ouverture et donc de grand gain, là où était précédemment installé un spot de grande ouverture, de faible gain et de moindre débit. L'accroissement de capacité est surtout important dans la voie de retour, i.e., des stations vers le satellite.

D'autre part, certains satellites de communication mettent en œuvre des formes d'onde utilisant des changements rapides de fréquence porteuse, tant en voie montante qu'en voie descendante.

L'un des problèmes techniques existant aujourd'hui est d'augmenter la capacité des communications, ce qui entraîne :
- L'augmentation du débit du flux montant venant de la zone dans laquelle opère le satellite,
- La capacité de gérer la congestion liée à la mobilité des stations sous les spots,
- De contenir la quantité de spectre à disposition, i.e., les ressources de la zone de communication.

Différents systèmes sont décrits dans l'art antérieur pour augmenter la capacité des communications :
- Les systèmes basés sur un hub ou plusieurs hubs satellitaires en relation avec un satellite configuré avec un ensemble de spots (HTS, VHTS), de type système global Inmarsat,
- Les systèmes dans lesquels le satellite assure une distribution statique des flux usagers émis par un ensemble de modems du hub ou hub modem, vers les différents spots,
- Les systèmes où le satellite assure un multiplexage des flux usagers reçus dans les différents spots vers le ou les hubs modems, pour le flux montant,
- Les systèmes dans lesquels les spots non adjacents peuvent utiliser les mêmes bandes spectrales, les interférences étant évitées par une très forte directivité des spots. Des spots adjacents utilisent des fréquences disjointes et/ou une polarisation croisée,
- Les systèmes dans lesquels les modems du hub sont configurés pour supporter chacun des émissions/réceptions en provenance d'un spot.

La demande de brevet EP 3182614 divulgue un procédé pour améliorer la capacité globale du réseau. L'envoi d'informations permet de déterminer une appartenance à un sous-groupe de terminaux et l'utilisation d'un schéma de modulation et de codage différent, selon que l'intervalle temporel attribué au terminal pour ses communications est un intervalle alloué à l'ensemble des terminaux utilisateurs d'un faisceau ou alloué à un sous-ensemble de terminaux utilisateurs.

La demande de brevet US 2002/0183057 décrit un système de communication par satellite utilisant des réseaux de commutation de passerelles permettant une couverture totale de tous les faisceaux d'utilisateur avec un sous-ensemble de passerelles à réutilisation de fréquence réduite. Le système utilise des réseaux de commutation dans les canaux de retour et de transfert. Ceci conduit donc à utiliser une bande passante inférieure à celle du système complet. Lorsque la demande en capacité augmente, les passerelles sont réactivées.

Malgré les avantages qu'ils procurent, les systèmes selon l'art antérieur présentent les inconvénients suivants :
- La capacité de traitement sous un spot est limitée à la capacité des hubs modems en charge de ce spot,
- Cette capacité ne peut être augmentée qu'en disposant de modems supplémentaires et en reconfigurant le satellite afin qu'il utilise des bandes spectrales additionnelles, tant en émission qu'en réception,
- Les systèmes connus ne permettent pas d'augmenter la capacité de transmission sans affecter dynamiquement un modem à un spot ni ajouter des bandes spectrales additionnelles.

L'objet de la présente invention repose sur une nouvelle approche de réutilisation spatiale dynamique du spectre. Les terminaux ou utilisateurs qui se trouvent sous un spot donné, et qui ne génèrent pas d'interférence avec les spots adjacents, vont réutiliser le spectre utilisé par au moins un de ces spots adjacents pour émettre leurs signaux ou des données à transmettre. L'idée est de rebasculer de la capacité de bande passante sous le spot qui est le plus occupé.

L'invention concerne un procédé pour augmenter la capacité de communication pour les flux de données en voie montante dans un système satellitaire comprenant plusieurs terminaux en émission sur un canal SATVLAN régional principal, lequel canal est présent en émission et en réception sous un ensemble de spots adjacents offrant une couverture régionale, chaque terminal ayant un besoin en communication, un terminal étant sous un spot courant servi par un hub modem caractérisé en ce qu'il comporte au moins les étapes suivantes :
- Chaque terminal émet et reçoit son trafic sur un canal SATVLAN lié au spot courant et émet en parallèle un signal balise d'identification sur le canal SATVLAN régional, avec un niveau de puissance définie,
- Sur le canal SATVLAN régional, un hub modem sur réception d'une balise décode l'identité d'un terminal et transmet à un contrôleur de hub un message contenant l'identifiant du terminal reçu,
- Pour chaque spot traité par un hub modem, le contrôleur hub détermine périodiquement à partir de l'ensemble des messages reçus, une liste de terminaux sous un spot adjacent qui génèrent des interférences dans ce spot,
- Lorsque la liste est vide, le contrôleur désigne ledit spot courant comme spot éligible à la réutilisation par le contrôleur et pouvant être réaffecté pour prendre en charge la communication d'un ou plusieurs terminaux,
- Pour chaque spot éligible, le contrôleur de hub évalue le besoin en capacité complémentaire pour au moins un ou plusieurs terminaux en cours de trafic sous couverture dudit spot éligible, et identifie le ou les terminaux ayant un besoin en capacité, ce besoin en capacité est fonction du type de plateforme et des besoins exprimés,
- Lorsque le besoin en capacité complémentaire est avéré dans un spot éligible, le contrôleur de hub modem instancie un hub modem complémentaire, puis raccorde ledit hub modem complémentaire à une chaîne radiofréquence avec une bande de fréquence utilisée dans le spot adjacent et indique au hub modem en charge du canal SATVLAN principal ou statique qu'il peut délester les terminaux ne générant pas d'interférence vers le nouveau hub modem complémentaire instancié.

Le procédé peut comporter au moins les étapes suivantes :
- un hub modem du système satellitaire ayant décodé l'identité d'un terminal transmet à un contrôleur de hub un message contenant l'identifiant du terminal,
- la liste des terminaux présents sous un spot adjacent et générant des interférences est déterminée à partir dudit identifiant.

Le procédé peut lorsqu'il n'y a plus de terminaux à gérer, libérer le hub modem en charge du SATVLAN dynamique établi.

En présence d'un terminal mobile dans le SATVLAN dynamique et générant des interférences dans le SATVLAN d'un spot adjacent, on peut réallouer le terminal d'un SATVLAN complémentaire dynamique vers le SATVLAN du spot courant.

Les signaux balises émis par les terminaux et reçus sont, par exemple, différenciés par un code CDMA contenu dans lesdits signaux balises.

Il est possible d'utiliser un moyen de synchronisation externe de type GPS.

On peut configurer les terminaux afin que pour chaque spot un terminal est en émission sur un canal SATVLAN régional sur un premier créneau de trame et sur un canal SATVLAN propre au spot sur chacun des autres créneaux d'une trame.

L'invention concerne aussi un système pour augmenter la capacité des communications dans un système satellitaire caractérisé en ce qu'il comporte au moins les éléments suivants :
- Une station hub comprenant plusieurs hubs modems, une chaîne radiofréquence,
- Plusieurs stations terminales,
- Un hub modem comprend un processeur configuré pour exécuter les étapes du procédé selon l'invention,
- Un ou plusieurs hubs modems de réserve gérés par la station hub.

Les dessins annexés illustrent l'invention :
[Fig.1] représente une architecture générale d'un système de transmission multi-spots en voie montante,
[Fig.2] illustre un entrelacement temporel entre les différents spots et un spot régional,
[Fig.3] illustre un exemple de mise en œuvre du procédé d'attribution et d'allocation dynamique de ressources en voie montante,
[Fig.4] est un chronogramme des étapes du procédé selon l'invention,
[Fig.5] illustre une orthogonalisation fréquentielle entre le SatVLAN principal et le SatVLAN alloué dynamiquement sous un même spot.

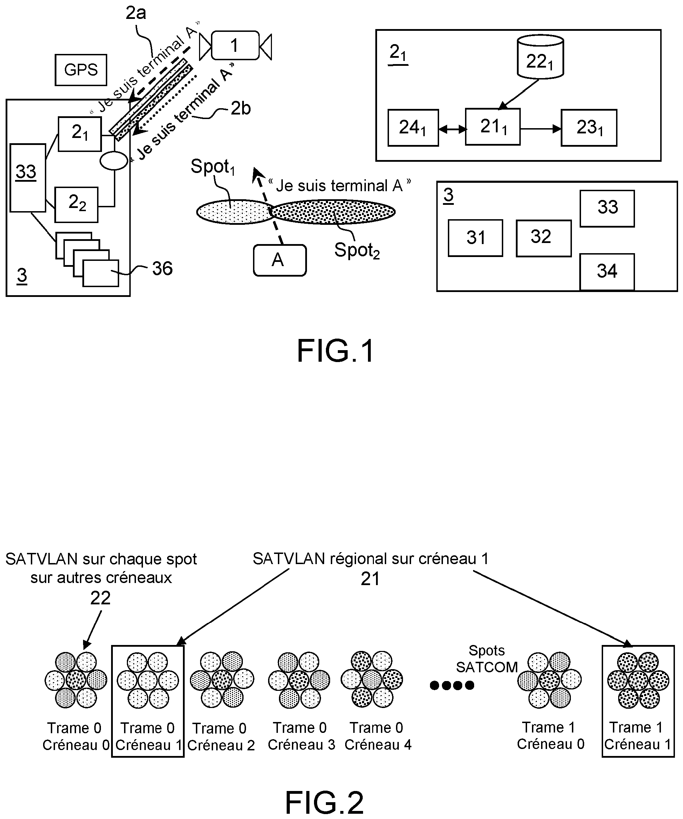

La figure 1 représente un exemple d'architecture du système selon l'invention comprenant un satellite 1, une station hub 3 ou hub contrôleur, comprenant plusieurs hubs modems 2₁, 2₂, plusieurs stations terminales 4j, une seule station étant représentée pour des raisons de simplification.

La station hub 3 comprend en plus des hubs modems 2ᵢ=(2₁, 2₂), une chaîne de transmission radiofréquence RF comprenant un ensemble 31 constitué d'antennes, d'amplificateurs, de modules de transposition, connus de l'homme du métier, la chaîne RF étant en liaison avec les différents hubs modems selon des connexions connues de l'homme du métier. Elle comprend aussi une fonction de contrôle des hubs modems 32, un routeur 33 et une horloge 34 commune à l'ensemble des modems. L'horloge a notamment pour fonction de synchroniser les modems sur les frontières de trames et de slots, selon des principes connus de l'homme du métier.

Un hub modem 2₁ comprend un processeur 21₁ configuré pour exécuter les étapes du procédé selon l'invention, une mémoire 22₁ permettant d'enregistrer au niveau du hub modem les signaux reçus pendant la durée d'un créneau temporel ou slot. Le hub modem comprend un module de codage/décodage 23₁ du contenu des signaux reçus au niveau d'un récepteur 24₁ du hub modem.

Le système comprend aussi une réserve 36 ou « pool » de hubs modems qui ne sont pas affectés au démarrage du système et qui sont gérés par la station hub 3 ou hub contrôleur, notamment pour leur affectation.

Dans le cas où l'ensemble des spots n'est pas géré par le même hub, les hubs sont synchronisés par un moyen externe 35 (i.e. GPS - Global Positioning System) de telle sorte que les différents spots - dont les réceptions sont gérées par des hubs modems - écoutent selon deux lois de saut de fréquence aux paliers indiqués, i.e., lois de saut de fréquence par SATVLAN/spot et par SATVLAN/régional/multispot.

Le satellite et un hub modem sont configurés de manière à recevoir des signaux sur les différents spots selon un plan de colorisation/fréquence/spot prédéfini et illustré à la figure 2.

Sur certains créneaux, l'ensemble des spots du système est configuré pour recevoir à la même fréquence, de telle manière qu'un terminal est potentiellement audible dans chacun des spots. Ainsi, sous chaque spot, un terminal est en émission sur un canal/SATVLAN régional présent dans l'exemple ci-dessus sur le « créneau 1 » de chaque trame, 21, et sur un canal/SATVLAN propre au spot sur chacun des autres créneaux de la trame, 22.

L'un des objectifs du procédé selon l'invention est d'augmenter la capacité de communication satellitaire pour les flux en voie montante (flux d'un terminal vers un hub modem, via le satellite) sans faire appel à une capacité spectrale supplémentaire, externe au système, et en réutilisant de manière dynamique le spectre en voie montante.

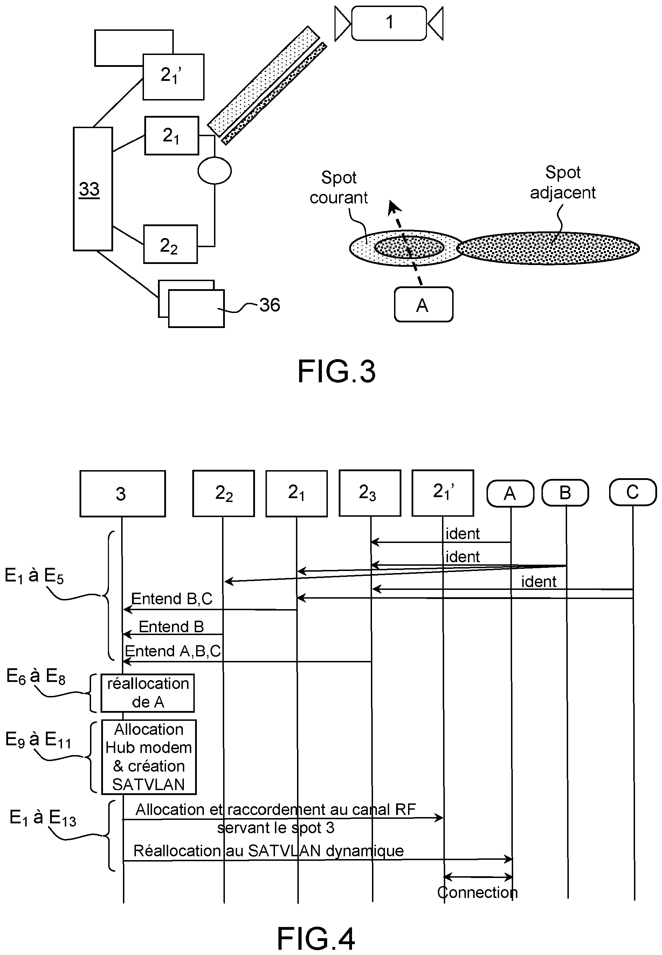

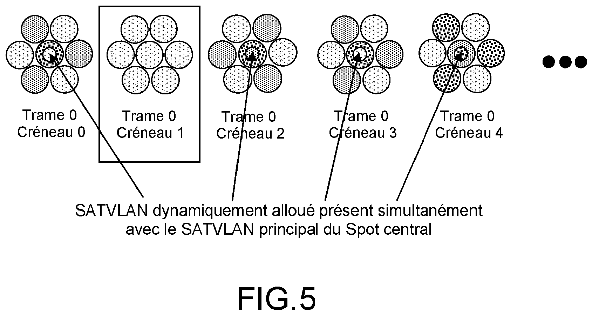

La figure 3 et la figure 4 illustrent un exemple de mise en œuvre du procédé selon l'invention et un chronogramme. La figure 5 illustre l'orthogonalisation des fréquences entre le SATVLAN principal et le SATVLAN alloué dynamiquement sous un même spot.

Sur la figure 3, on voit que le terminal A réutilise les ressources spectrales du SATVLAN présent dans le spot courant ou dans le spot adjacent SP₂ ; le spot SP₁ (spot courant pour le terminal A) est servi par le hub modem 2₁ et le hub modem 2_{1'} comme il va être expliqué ci-après. Le hub modem 2_{1'} a été alloué de manière dynamique et traite les communications du terminal A.

La figure 4 est un chronogramme illustrant les étapes mises en œuvre par le procédé selon l'invention pour l'entrée d'un terminal dans un réseau de communication, avec trois terminaux mobiles A, B et C sous le même spot SP₃ et servis par un même hub modem 2₃. Un spot courant a des spots adjacents, le contrôleur hub gère le réseau.
E1 - Chaque terminal A, B et C émet et reçoit son trafic sur un canal SATVLAN lié à un spot et émet en parallèle un signal balise d'identification Id(A), Id(B), Id(C) sur le canal SATVLAN régional, i.e. multispot ;
E2 - En émission sur le canal SATVLAN régional, un terminal A, B et C émet avec un niveau de puissance prédéterminé P(A), P(B), P(C), un signal balise qui utilise par exemple une modulation à accès multiple par répartition en code ou CDMA (Code Divisional Multiple Access). Le code CDMA utilisé est propre au terminal afin de permettre une émission non coordonnée sur ce canal entre plusieurs terminaux et durcir le signal d'identification par étalement de spectre ;
E3 - Sur le Canal SATVLAN régional, les hubs modems reçoivent la balise (signal contenant un identifiant) pour chacun des terminaux, chaque balise étant distinguée par le code CDMA. Cette réception de la balise est conditionnée par la position du terminal sous un ou plusieurs spots du satellite ;
E4 - Chaque hub modem ayant correctement décodé l'identité du terminal qui cherche à s'accrocher au réseau de transmission, transmet au contrôleur de hub (station hub 3) un message contenant l'identifiant Id du terminal reçu ;
E5 - Pour chaque spot traité individuellement par un hub modem, le contrôleur de hub détermine périodiquement, à partir de l'ensemble des messages reçus (messages contenant un identifiant associé à un terminal A, B, C), la liste des terminaux présents sous un spot adjacent, et qui génèrent une interférence dans ce spot, c'est-à-dire dont le code CDMA a pu être démodulé et donc le terminal identifié. Ce cas se produit notamment lorsque le terminal qui cherche à s'accrocher dans un réseau se trouve simultanément sous plusieurs spots ; La périodicité est choisie par un opérateur, notamment en fonction de la taille du spot, de la mobilité des terminaux ;
E6 - Pour chaque spot courant, le contrôleur de hub identifie une liste L contenant des terminaux dans ce spot courant susceptibles de générer des interférences dans les spots adjacents. Si la liste est vide aucun terminal de la liste ne génère d'interférence et le spot peut se voir attribuer un SATVLAN (ressources fréquentielles des spots adjacents) qui servira un ou plusieurs terminaux déjà présents dans le spot courant. Lorsque la liste n'est pas vide, i.e., il existe au moins un terminal qui interfère, et sous le spot courant on ne peut attribuer la ressource fréquentielle utilisée par le spot adjacent dans lequel l'interférence est constatée;
E7 - Dans le SATVLAN statique, chaque spot courant pour lequel la liste des terminaux qui se trouve sous lui est vide est de fait dit « orthogonal », au sens spatial du terme, aux spots adjacents. Ce spot courant est alors marqué comme éligible à la réutilisation par le contrôleur de hub. Il est donc possible d'augmenter la capacité de transmission du spot sans générer d'interférence supplémentaire,
E8 - Dans chaque spot courant éligible, le contrôleur de hub évalue le besoin en capacité complémentaire pour les terminaux sous ce spot, par exemple, en fonction des trafics en cours des terminaux et des trafics prévus, si cette dernière information est disponible. Le contrôleur de hub identifie les terminaux susceptibles d'être réaffectés à un spot éligible. L'identification d'un terminal à réaffecter est réalisée, par exemple, en exécutant un algorithme connu de l'homme du métier ou un logiciel de type intelligence artificielle, qui prend comme données d'entrée, la liste des terminaux présents sous un spot courant et qui sélectionne les terminaux qui sont le moins bien servis au vu de leur attendu de service, par ce spot. Par exemple, des terminaux qui ont besoin de 1 Mb/s avec seulement un débit disponible de 300kb/s, ou encore les terminaux qui ne sont pas entendus par d'autres spots et qui sont donc moins susceptibles de sortir du spot ; on affecte à chaque terminal présent dans la liste une priorité pour être réaffecté à un spot éligible complémentaire,
E9 - Si le besoin en capacité complémentaire est avéré dans ce spot, le contrôleur de hub modem décide de l'instanciation d'un hub modem complémentaire (hub modem 2_{1'} figure 2). Le besoin en capacité complémentaire intervient lorsque l'attendu en termes de services (débit minimum ou débit moyen, ou encore taux de pertes paquets) pour au moins un terminal sous le spot courant ne peut être atteint. L'instanciation est faite par un algorithme de sélection d'un équipement hub modem physique dans le pool de hubs modems non affectés ; elle peut aussi être faite par la configuration d'une machine virtuelle exécutant les fonctions hub modem ; Un hub physique peut être remplacé par une fonction hub modem virtualisée par un calculateur pouvant réaliser cette fonction ou d'autres fonctions, par exemple une fonction de routage, en fonction de la configuration du calculateur ;
E10 - Le contrôleur de hub raccorde la fonction et/ou l'équipement hub modem complémentaire à la chaine radiofréquence RF de traitement du signal analogique, en utilisant par exemple des commutateurs et selon un principe connu de l'homme du métier. Cette chaine RF est dédiée au spot courant de manière à ne pas avoir à reconfigurer le satellite ;
E11 - Une fois le hub modem instancié (raccordé), le contrôleur de hub indique au hub modem 2₁ en charge du SATVLAN principal qu'il peut délester les terminaux présents sous le SATVLAN principal et ne générant pas d'interférence, vers le hub modem 2_{1'} ; le hub modem raccordé servant un SATVLAN complémentaire,
E12 - Le hub modem 2₁ réalloue vers le hub modem 2_{1'} les terminaux indiqués par le contrôleur de hub ;
E13 - Une fois les terminaux présents sur SATVLAN établis dynamiquement, il est possible que l'un ou l'autre des terminaux en mobilité se rapproche de la zone de recouvrement entre les spots et génère une interférence sur le SATVLAN d'un spot adjacent ;
E14 - Les étapes E1-E5 sont effectuées de manière périodique pour tous les terminaux et pour tous les spots, la périodicité étant notamment fonction de la mobilité des terminaux et de la taille des spots. A l'issue de l'étape E5, le contrôleur de hub peut détecter qu'un terminal présent sur un SATVLAN dynamique génère une interférence dans le SATVLAN d'un spot adjacent. Le contrôleur de hub demande alors au hub modem 2_{1'} de réallouer le terminal vers le hub modem 2₁; le terminal est rebasculé du SATVLAN complémentaire vers le SATVLAN statique du spot courant,
E15 - Lorsque le SATVLAN dynamique n'a plus de terminaux à gérer, le hub modem peut procéder à la libération du hub modem en charge du SATVLAN dynamique.

La figure 5 illustre l'orthogonalisation fréquentielle entre le SATVLAN principal et le SATVLAN alloué dynamiquement sous un même spot.

L'exemple qui suit est un exemple chiffré donné à titre illustratif. Un spot A écoute en réception une Bande de 15,2 à 15,3 GHz soit 100 MHz de bande passante, un terminal dans un spot B adjacent en réception de 15,1 à 15,2 GHz, se voit réaffecté un canal de 10Mhz originellement de 15,11 à 15,12 GHz vers 15,25, à 15, 26 GHz tout en restant sous couverture du spot B. Une fois la réallocation effectuée, le terminal, s'il est mobile, peut bouger sous son spot et s'approcher de la bordure du spot. Dans ce cas, le risque d'interférence peut redevenir important. Dans l'exemple du dessus le terminal interférerait avec des émissions d'autres terminaux présents sous le spot A dans la bande 15,2 à 15,3 GHz. Afin de pallier ce risque, plusieurs solutions de détection d'interférence sont possibles :
- La station hub fournit un canal d'identification et de mesure commun à tous les spots adjacents. Dans ce canal, chaque terminal effectue périodiquement une émission d'un signal bref utilisant un identifiant qui lui est propre et permettant aux modems hub servant les spots adjacents de détecter une interférence venant de ce terminal ;
- Le terminal utilise le canal de signalisation retour présent sur chacun des spots adjacents afin que le hub modem soit en mesure de déterminer le niveau reçu et donc l'interférence potentielle ;
- Le hub modem utilise un procédé de suppression successive interférence (NOMA) pour détecter les terminaux émettant dans la fréquence.
- En cas d'interférence trop forte détectée par un modem servant un spot adjacent, le hub peut ainsi déclencher une réallocation du terminal vers le modem initial ou encore déterminer une autre bande ne générant pas d'interférence.

Le procédé selon l'invention permet d'augmenter la capacité de communications dans un système satellitaire.

## Revendications

1. Procédé pour augmenter la capacité de communication pour les flux de données en voie montante utilisant un canal commun à tous les spots pour la transmission d'un signal balise, dans un système satellitaire comprenant plusieurs terminaux en émission sur un canal SATVLAN régional principal, lequel canal est présent en émission et en réception sous un ensemble de spots adjacents offrant une couverture régionale, chaque terminal ayant un besoin en communication, un terminal étant sous un spot courant servi par un hub modem **caractérisé en ce qu'**il comporte au moins les étapes suivantes :
- Chaque terminal émet et reçoit son trafic sur un canal SATVLAN lié au spot courant et émet en parallèle un signal balise d'identification sur le canal SATVLAN régional, avec un niveau de puissance définie,
- sur le canal SATVLAN régional, un hub modem sur réception d'une balise décode l'identité d'un terminal et transmet à un contrôleur de hub un message contenant l'identifiant du terminal reçu,
- Pour chaque spot traité par un hub modem, le contrôleur hub détermine périodiquement à partir de l'ensemble des messages reçus, une liste de terminaux sous un spot adjacent qui génèrent des interférences dans ce spot,
- Lorsque la liste est vide, le contrôleur de hub désigne ledit spot courant comme spot éligible à la réutilisation par le contrôleur du hub et pouvant être réaffecté pour prendre en charge la communication d'un ou plusieurs terminaux,
- Pour chaque spot éligible, le contrôleur de hub évalue le besoin en capacité complémentaire pour au moins les terminaux en cours de trafic sous couverture dudit spot éligible, et identifie le ou les terminaux ayant un besoin en capacité de communication,
- Lorsque le besoin en capacité complémentaire est avéré dans un spot éligible, le contrôleur de hub modem instancie un hub modem complémentaire, puis raccorde ledit hub modem complémentaire à une chaîne radiofréquence avec une bande de fréquence utilisée dans le spot adjacent et indique au hub modem en charge du canal SATVLAN principal ou statique qu'il peut délester les terminaux ne générant pas d'interférence vers le nouveau hub modem complémentaire instancié.

2. Procédé selon la revendication 1 **caractérisé en ce qu'**il comporte en outre les étapes suivantes :
- un hub modem du système satellitaire ayant décodé l'identité d'un terminal transmet à un contrôleur de hub un message contenant l'identifiant du terminal,
- la liste des terminaux présents sous un spot adjacent et générant des interférences est déterminée à partir dudit identifiant.

3. Procédé selon l'une des revendications 1 ou 2 **caractérisé en ce qu'**il comporte en outre l'étape suivante :
- Lorsqu'il n'y a plus de terminaux à gérer, on libère le hub modem en charge du SATVLAN dynamique établi.

4. Procédé selon l'une des revendications 1 à 3 **caractérisé en ce qu'**en présence d'un terminal mobile présent dans le SATVLAN dynamique et générant des interférences dans le SATVLAN d'un spot adjacent, on réalloue le terminal d'un SATVLAN complémentaire dynamique vers le SATVLAN du spot courant.

5. Procédé selon l'une des revendications précédentes **caractérisé en ce que** les signaux balises émis par les terminaux et reçus sont différenciés par un code CDMA contenu dans lesdits signaux balises.

6. Procédé selon l'une des revendications précédentes **caractérisé en ce que** l'on utilise un moyen de synchronisation externe de type GPS.

7. Procédé selon l'une des revendications précédentes **caractérisé en ce que** pour chaque spot un terminal est en émission sur un canal SATVLAN régional sur un premier créneau de trame et sur un canal SATVLAN propre au spot sur chacun des autres créneaux d'une trame.

8. Système pour augmenter la capacité des communications dans un système satellitaire (1) **caractérisé en ce qu'**il comporte au moins les éléments suivants :
- Une station hub (3) comprenant plusieurs hubs modems (2₁, 2₂), une chaîne radiofréquence,
- Plusieurs stations terminales (4j),
- Un hub modem (2₁) comprend un processeur (21₁) configuré pour exécuter les étapes du procédé selon l'une des revendications 1 à 7,
- Un ou plusieurs hubs modems de réserve (36) gérés par la station hub (3).

## Patentansprüche

1. Verfahren zur Erhöhung der Kommunikationskapazität für die Uplink-Datenflüsse, welche einen für alle Punkte gemeinsamen Kanal zur Übertragung eines Bakensignals verwenden, in einem Satellitensystem, welches eine Vielzahl von Sende-Endgeräten auf einem Bereichs-Haupt-SATVLAN-Kanal umfasst, wobei der Kanal im Sende- und im Empfangsbetrieb unter einer Gruppe von benachbarten Punkten vorhanden ist, welche eine Bereichsabdeckung bieten, wobei jedes Endgerät einen Kommunikationsbedarf aufweist, wobei ein Endgerät unter einem augenblicklichen Punkt steht, welcher durch einen Modem-Hub bedient wird, **dadurch gekennzeichnet, dass** es mindestens folgende Schritte umfasst:
- jedes Endgerät sendet und empfängt seinen Verkehr auf einem SATVLAN-Kanal, welcher mit dem augenblicklichen Punkt verbunden ist, und sendet parallel ein Baken-Identifizierungssignal auf dem Bereichs-SATVLAN-Kanal, mit einem definierten Leistungspegel,
- auf dem Bereichs-SATVLAN-Kanal dekodiert ein Modem-Hub bei Empfang einer Bake die Identität eines Endgerätes und überträgt an einen Hub-Controller eine Nachricht, welche die Kennung des empfangenen Endgerätes enthält,
- für jeden durch einen Modem-Hub bearbeiteten Punkt bestimmt der Hub-Controller periodisch, anhand sämtlicher empfangener Nachrichten, eine Liste von Endgeräten unter einem angrenzenden Punkt, welche Störungen in diesem Punkt erzeugen,
- wenn die Liste leer ist, bezeichnet der Hub-Controller den augenblicklichen Punkt als zur Wiederverwendung durch den Controller des Hubs in Frage kommenden Punkt, und welcher zur Übernahme der Kommunikation eines oder mehrerer Endgeräte neu zugewiesen werden kann,
- für jeden in Frage kommenden Punkt bewertet der Hub-Controller den zusätzlichen Kapazitätsbedarf für mindestens diejenigen Endgeräte mit augenblicklichem Verkehr unter der Abdeckung des in Frage kommenden Punktes, und identifiziert das oder die Endgeräte, welche einen Kommunikationsbedarf aufweisen,
- wenn der zusätzliche Kapazitätsbedarf in einem in Frage kommenden Punkt nachgewiesen ist, instanziiert der Controller des Modem-Hubs einen zusätzlichen Modem-Hub, und bindet anschließend den Modem-Hub an eine Hochfrequenzkette mit einer in dem angrenzenden Punkt verwendeten Frequenz an und zeigt dem für den Haupt- oder statischen SATVLAN-Kanal zuständigen Modem-Hub an, dass er die Endgeräte abwerfen kann, welche keine Störung in Richtung des neuen, zusätzlichen instanziierten Modem-Hubs erzeugen.

2. Verfahren nach Anspruch 1, **dadurch gekennzeichnet, dass** es ferner folgende Schritte umfasst:
- nachdem ein Modem-Hub die Identität eines Endgerätes dekodiert hat, überträgt er eine Nachricht an einen Hub-Controller, welche die Kennung des Endgerätes enthält,
- die Liste der unter einem angrenzenden Punkt vorhandenen und Störungen erzeugenden Endgeräte wird anhand der Kennung bestimmt.

3. Verfahren nach einem der Ansprüche 1 oder 2, **dadurch gekennzeichnet, dass** es ferner folgenden Schritt umfasst:
- wenn keine Endgeräte mehr zu verwalten sind, befreit man den Modem-Hub, der für den hergestellten dynamischen SATVLAN zuständig ist.

4. Verfahren nach einem der Ansprüche 1 bis 3, **dadurch gekennzeichnet, dass** in Anwesenheit eines beweglichen Endgerätes, welches in dem dynamischen SATVLAN vorhanden ist und Störungen in dem SATVLAN eines angrenzenden Punktes verursacht, man das Endgerät eines zusätzlichen dynamischen SATVLAN an den SATVLAN des augenblicklichen Punktes neu zuweist.

5. Verfahren nach einem der vorhergehenden Ansprüche, **dadurch gekennzeichnet, dass** die Bakensignale, welche durch die Endgeräte gesendet werden und empfangen werden, durch einen in den Bakensignalen enthaltenen CDMA-Code differenziert werden.

6. Verfahren nach einem der vorhergehenden Ansprüche, **dadurch gekennzeichnet, dass** man ein externes Synchronisierungsmittel vom Typ GPS verwendet.

7. Verfahren nach einem der vorhergehenden Ansprüche, **dadurch gekennzeichnet, dass** für jeden Punkt ein Endgerät im Sendebetrieb auf einem Bereichs-SATVLAN-Kanal in einem ersten Rahmen-Zeitabschnitt ist, und auf einem spezifischen SATVLAN-Kanal des Punktes in jedem der anderen Abschnitte eines Rahmens ist.

8. System zur Erhöhung der Kommunikationskapazität in einem Satellitensystem (1), **dadurch gekennzeichnet, dass** es mindestens folgende Elemente umfasst:
- eine Hub-Station (3), welche mehrere Modem-Hubs (2₁, 2₂), eine Hochfrequenzkette umfasst,
- mehrere Endgeräte-Stationen (4j),
- einen Modem-Hub (2₁), welcher einen Prozessor (21₁) umfasst, welcher zum Ausführen der Schritte des Verfahrens nach einem der Ansprüche 1 bis 7 konfiguriert ist,
- einen oder mehrere Reserve-Modem-Hubs (36), welche durch die Hub-Station (3) verwaltet werden.

## Claims

1. A method for increasing the communication capacity for the uplink data streams using a channel that is shared by all the spots for transmitting a beacon signal, in a satellite system comprising several terminals transmitting over a main regional SATVLAN channel, which channel is available for transmitting and receiving under a set of adjacent spots offering regional coverage, with each terminal having a communication requirement, a terminal being under a current spot served by a modem hub, **characterised in that** it comprises at least the following steps of:
- each terminal transmitting and receiving its traffic over a SATVLAN channel connected to the current spot and at the same time transmitting an identification beacon signal over the regional SATVLAN channel, with a defined power level;
- on the regional SATVLAN channel, a modem hub, upon receipt of a beacon, decoding the identity of a terminal and transmitting a message to a hub controller that contains the identifier of the received terminal;
- for each spot processed by a modem hub, the hub controller periodically determining, on the basis of all the received messages, a list of terminals under an adjacent spot that generate interference in this spot;
- when the list is empty, the hub controller designating said current spot as being a spot eligible for reuse by the hub controller and as being able to be reassigned in order to take over the communication of one or more terminals;
- for each eligible spot, the hub controller assessing the additional capacity requirement for at least the terminals that are currently communicating that are covered by said eligible spot, and identifying the one or more terminals with a communication capacity requirement;
- when the additional capacity requirement is verified in an eligible spot, the modem hub controller instantiating an additional modem hub, then connecting said additional modem hub to a radiofrequency chain with a frequency band that is used in the adjacent spot and notifying the modem hub responsible for the main or static SATVLAN channel that it can offload the terminals not generating interference towards the new instantiated additional modem hub.

2. The method as claimed in claim 1, **characterised in that** it further comprises the following steps of:
- transmitting, by a modem hub of the satellite system having decoded the identity of a terminal, a message to a hub controller that contains the identifier of the terminal;
- determining, on the basis of said identifier, the list of terminals present under an adjacent spot and generating interference.

3. The method as claimed in any of claims 1 or 2, **characterised in that** it further comprises the following steps of:
- releasing, when there are no longer any terminals to manage, the modem hub responsible for the established dynamic SATVLAN channel.

4. The method as claimed in any of claims 1 to 3, **characterised in that**, in the presence of a mobile terminal present in the dynamic SATVLAN channel and generating interference in the SATVLAN channel of an adjacent spot, the terminal of a dynamic additional SATVLAN channel is reassigned to the SATVLAN channel of the current spot.

5. The method as claimed in any of the preceding claims, **characterised in that** the beacon signals that are transmitted by the terminals and that are received are differentiated by a CDMA code that is contained in said beacon signals.

6. The method as claimed in any of the preceding claims, **characterised in that** an external synchronisation means of the GPS type is used.

7. The method as claimed in any of the preceding claims, **characterised in that**, for each spot, a terminal transmits over a regional SATVLAN channel on a first frame slot and over a SATVLAN channel specific to the spot over each of the other slots of a frame.

8. A system for increasing the communication capacity in a satellite system (1), **characterised in that** it comprises at least the following elements:
- a hub station (3) comprising several modem hubs (2₁, 2₂), a radiofrequency chain;
- several terminal stations (4j);
- a modem hub (2₁) comprises a processor (21₁) configured to execute the steps of the method as claimed in one of claims 1 to 7;
- one or more pool modem hubs (36) managed by the hub station (3).
